**Europäisches Patentamt**

**European Patent Office**

**Office européen des brevets**

(11) Veröffentlichungsnummer: **0 487 961 A2**

# EUROPÄISCHE PATENTANMELDUNG

(21) Anmeldenummer: **91119146.8**

(22) Anmeldetag: **11.11.91**

(51) Int. Cl.5: **B29B 17/00, C22B 1/00**

(30) Priorität: **26.11.90 DE 4037511**

(43) Veröffentlichungstag der Anmeldung:
**03.06.92 Patentblatt 92/23**

(84) Benannte Vertragsstaaten:
**AT BE CH DE DK ES FR GB GR IT LI LU NL SE**

(71) Anmelder: **Bachmann, Arnd**
**Groner Torstrasse 24**
**W-3400 Göttingen(DE)**

(72) Erfinder: **Bachmann, Arnd**
**Groner Torstrasse 24**
**W-3400 Göttingen(DE)**

(74) Vertreter: **Arendt, Helmut, Dipl.-Ing.**
**Patentanwalt Bergiusstrasse 2 c**
**W-3000 Hannover 51(DE)**

(54) Verfahren und Vorrichtung zur Materialrückgewinnung von Einwegverpackungen.

(57) Es wird ein Verfahren und eine Vorrichtung zur Durchführung des Verfahrens vorgeschlagen, wonach für eine besonders raumsparende Verdichtung des Materials von Einwegverpackungen zwei nacheinander ablaufende Preßvorgänge vorgesehen ist, wodurch die Verpackungsbehälter zunächst verdichtet und anschließend das verdichtete Material granuliert wird.

Fig. 1

Die Erfindung betrifft ein Verfahren zur Materialrückgewinnung von Einwegverpackungen, insbesondere von schalenförmigen Verpackungsbehältern aus Aluminium für die Fernverpflegung mit Reinigungs- und Verdichtungsvorgängen für das Material nach Patent... (Patentanmeldung P 40 04 670.2).

In Wirtschaftsbetrieben und in der Verwaltung werden von Arbeitnehmern täglich mehrere Millionen Menüs verzehrt, welche in schalenförmigen Einwegverpackungen aus Aluminium oder Kunststoff bei Unternehmen angeliefert werden, welche keine eigene Verpflegung für ihre Mitarbeiter herstellen. Die Einwegschalen sind wegen ihrer Sperrigkeit nach der Benutzung nicht wieder verwertet worden. Ein tägliches Einsammeln ist wegen des großen Volumens zu kostenaufwendig. Mit dem Verfahren nach der DE 40 04 670 C 1 wurde eine Möglichkeit geschaffen, das Material der Einwegpackungen wirtschaftlich lohnend zurückzugewinnen.

Der Erfindung liegt die Aufgabe zu Grunde, das Verfahren und die Einrichtung nach dem vorgenannten Patent weiter zu verbessern, um eine noch raumsparendere Verdichtung des Materials für den Transport zum Schmelzort zu erzielen. Gleichzeitig soll das verdichtete Material so weitgehend gesäubert und getrocknet sein, daß es unmittelbar ohne Gefahr der Schmelztemperatur ausgesetzt werden kann.
Die Erfindung zur Lösung dieser Aufgabe zeichnet sich dadurch aus, daß der Verpackungsbehälter durch zwei nacheinander ablaufende Preßvorgänge zunächst verdichtet und anschließend das verdichtete Material granuliert wird.

Zur Verdichtung dienen bei der Einrichtung nach dem Hauptpatent ein verzahntes Preßwalzenpaar, zwischen dessen Walzen die Verpackungen hindurchgeführt werden. In weiterer vorteilhafter Ausbildung wird vorgeschlagen, zwei in Förderrichtung mit Abstand hintereinander angeordnete, verzahnte Preßwalzenpaare zu verwenden, wobei die Verzahnung des ersten Walzenpaares etwa einen rechten Winkel zu der des zweiten Walzenpaares bildet. Das kann durch senkrecht zueinander ausgerichtete Walzenachsen oder durch eine Schrägverzahnung bei parallelen Walzenpaaren erreicht werden.
Zur Reinigung des Materials sind Bürstenwalzen oder Hochdruckdüsen im Raum zwischen den verzahnten Walzen einsetzbar. Dadurch kann die gesamte Vorrichtung kompakter gestaltet werden. Einen besonderen Vorteil bietet die vertikale Anordnung der Walzenachsen, so daß nach dem Reinigungsvorgang das Wasser von dem in erster Stufe verdichteten Material unter Ausnutzung der Schwerkraft abfließen kann.

Weitere, den Erfindungsgegenstand vorteilhaft gestaltende Merkmale sind den Unteransprüchen zu entnehmen.

In der Zeichnung ist ein Ausführungsbeispiel einer Vorrichtung zur Durchführung des erfindungsgemäßen Verfahrens mit verschiedenen Reinigungseinrichtungen schematisch dargestellt und nachstehend erläutert.

Es zeigen:

Fig. 1 die Stirnansicht zweier Walzenpaare mit zwei Reinigungselementen in Form von Walzenbürsten in paralleler Ausrrichtung zu den verzahnten Preßwalzen,

Fig. 2 die Stirnansicht der Walzenpaare mit zwei Reinigungswalzen und deren Ausrichtung senkrecht zu den Achsen der Preßwalzen und

Fig. 3 die Stirnansicht zweier Preßwalzenpaare mit zwischen diesen angeordneten Hochdruckstrahlduschen.

In den Figuren der Zeichnung beschränkt sich die Darstellung der Vorrichtung zur Durchführung des erfindungsgemäßen Verfahrens auf die Anordnung von Walzen mit Schrägverzahnungen. Durch die Schrägverzahnung erübrigt sich die Anordnung der Walzenpaare in einem rechten Winkel zueinander. Es ist augenfällig, daß dadurch eine besonders raumsparende Anordnung der Vorrichtungteile möglich ist. Mit dem ersten Walzenpaar 1 werden die durch den Einführtrichter 2 zugeführten Menüschalen 3 erfaßt und unter Bildung von Falten bzw. Kerben 4 erheblich verdichtet. Das Material wird auf seinem Wege zum zweiten Walzenpaar 5 durch Bürstenwalzen 6 und 7 beidseitig gereinigt. Die der Einfachheit halber nicht dargestellten Schrägverzahnungen der Walzenpaare 1 und 5 bilden etwa einen Winkel von 90° zueinander. Das vorgepreßte Material mit den Falten 4 wird beim Durchgang durch das Walzenpaar 5 mit etwa senkrecht zu den Nuten oder Falten 4 verlaufenden Nuten oder Kerben versehen, die zu einem Zerstückeln und damit Granulieren des Materials führen. Die einzelnen Granulatteile sind mit 8 bezeichnet. Zusätzlich besteht die Möglichkeit, das erste verzahnte Preßwalzenpaar 1 mit Reinigungsduschen 9 während des Preßvorgangs kontinuierlich zu reinigen. Die einzelnen Granulatteile 8 des verdichteten Materials fallen in einen Behälter, an dessen Boden sich Ablaufmöglichkeiten für das zur Reinigung benutzte Wasser befinden. Nach einer genügenden Verweilzeit des Granulats ist es so weitgehend von Feuchtigkeit befreit, daß es ohne Gefahr in die Schmelze zur Wiedergewinnung des Materials gegeben werden kann.

Es besteht natürlich auch die Möglichkeit, die Walzenpaare mit Geradverzahnungen zu versehen, dadurch kann jedoch nicht die raumsparende Ausbildung der gesamten Vorrichtung erreicht werden, die mit einer parallelen Anordnung der Walzenpaare unter Verwendung von Schrägverzahnungen gegeben ist.

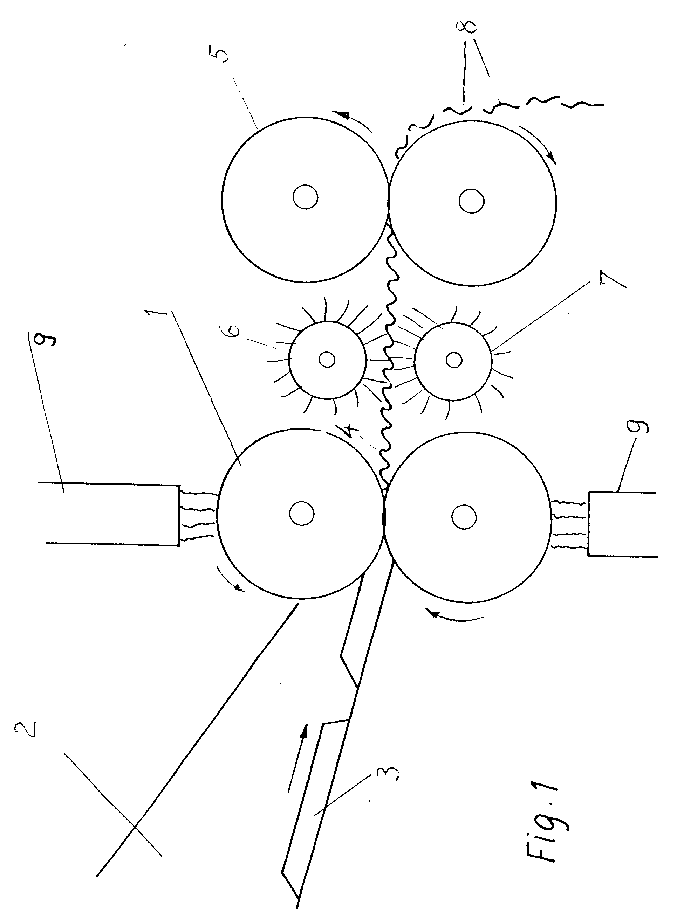

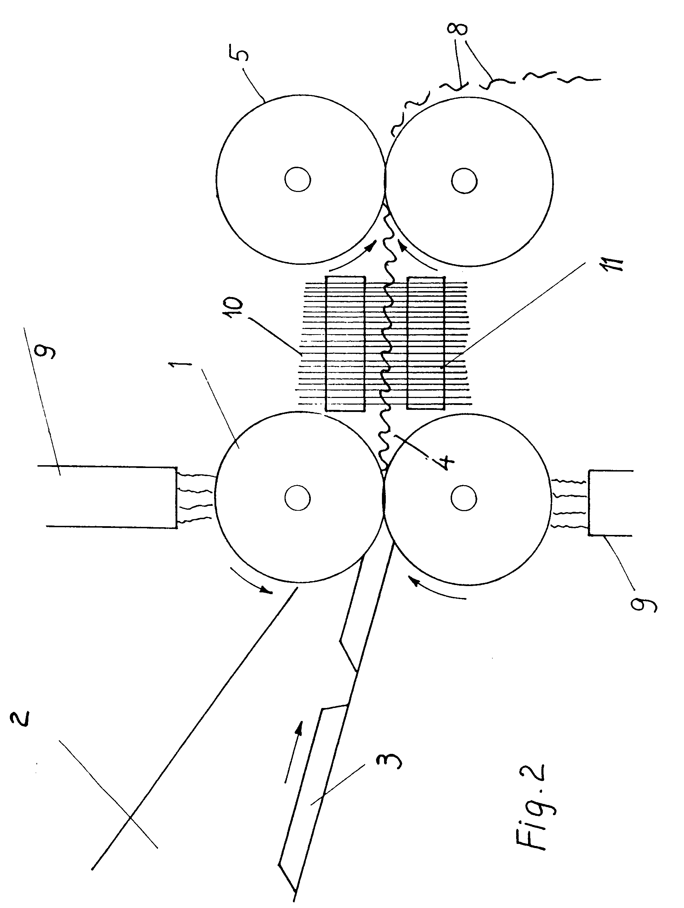

Bei der Ausführung nach Figur 2 entsprechen alle Einzelheiten denen der Ausführung nach der Figur 1 mit dem Unterschied, daß Bürstenwalzen 10 und 11 senkrecht zu den Drehachsen der Preßwalzenpaare angeordnet sind. Der Vorteil dieser Anordnung ist in einer besseren meachanischen Reinigung zu sehen. Die Bewegungsrichtung der einzelnen Borsten verläuft in Längsrichtung der Nuten oder Falten 4 des vorgepreßten Materials.

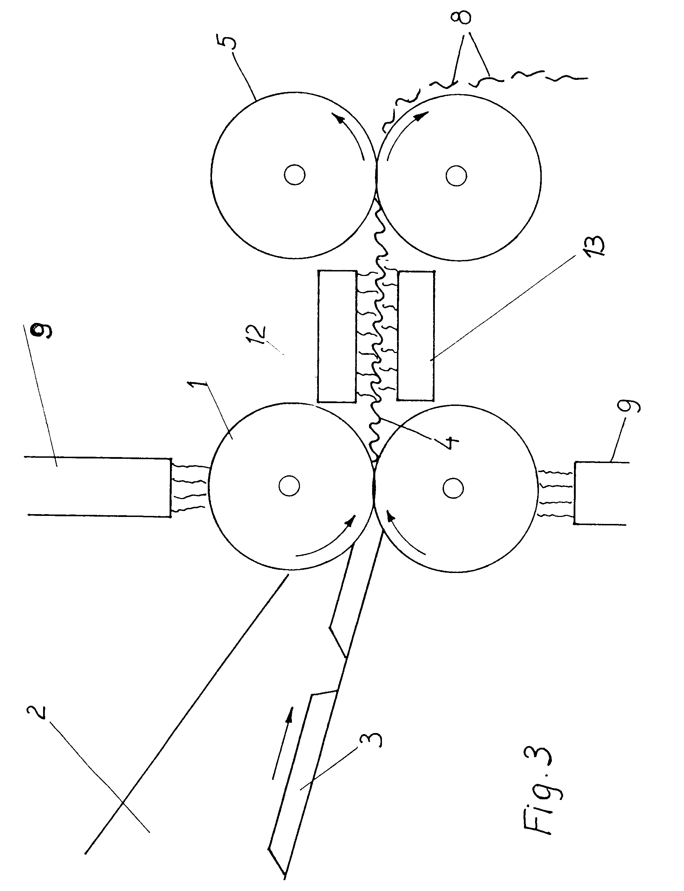

Bei der Ausführung nach der Figur 3 sind an Stelle der Bürstenwalzen Hochdruckstrahlduschen 12 und 13 zwischen den Preßwalzenpaaren in Benutzung. Es besteht auch die Möglichkeit, Hochdruckstrahlduschen mit Walzenbürsten zu kombinieren, um eine besonders weitgehende Reinigung zu erzielen.

**Patentansprüche**

1. Verfahren zur Materialrückgewinnung von Einwegverpackungen, insbesondere von schalenförmigen Verpackungsbehältern aus Aluminium für die Fernverpflegung mit Reinigungs- und Verdichtungsvorgängen für das Material, dadurch gekennzeichnet, daß die Verpakkungsbehälter 13 durch zwei nacheinander ablaufende Preßvorgänge zunächst verdichtet und anschließend das verdichtete Material granuliert wird.

2. Vorrichtung zur Durchführung des Verfahrens nach Anspruch 1, unter Verwendung verzahnter Preßwalzen, zwischen denen die Verpakkungen zur Verdichtung hindurchgeführt werden, dadurch gekennzeichnet, daß zwei in Förderrichtung hintereinander angeordnete Walzenpaare (1, 5) mit Verzahnungen vorgesehen sind und die Verzahnung eines Walzenpaares etwa einen rechten Winkel zu der des zweiten Walzenpaares bildet.

3. Vorrichtung nach Anspruch 1, dadurch gekennzeichnet, daß die Walzen mit Schrägverzahnungen versehen sind.

4. Vorrichtung nach Anspruch 2 oder 3, dadurch gekennzeichnet, daß die Walzenpaare mit Abstand zueinander und im Raum zwischen den Walzenpaaren Reinigungselemente (6, 7; 10, 11; 12, 13) angeordnet sind.

5. Vorrichtung nach Anspruch 4, dadurch gekennzeichnet, daß als Reinigungselemente walzenförmige Bürsten (6, 7; 10, 11) vorgesehen sind.

6. Vorrichtung nach Anspruch 4, dadurch gekennzeichnet, daß zur Reinigung Duschen (12, 13) dienen.

7. Vorrichtung nach Anspruch 5 oder 6, gekennzeichnet durch die Kombination von Reinigungsbürsten und Duschen.

8. Vorrichtung nach einem der Ansprüche 1 bis 7, dadurch gekennzeichnet, daß zusätzliche Reinigungselemente (9) für das in Förderrichtung erste Walzenpaar (1) vorgesehen sind.

9. Vorrichtung nach einem der Ansprüche 1 bis 8, dadurch gekennzeichnet, daß die Walzenachsen der Preßwalzen (1, 6) vertikal ausgerichtet sind.

Fig.1

EP 0 487 961 A2

Fig.2

EP 0 487 961 A2

Fig. 3

EP 0 487 961 A2